# EUROPÄISCHE PATENTSCHRIFT

(11) **EP 1 564 386 B1**
(45) Veröffentlichungstag und Bekanntmachung des Hinweises auf die Patenterteilung: **02.08.2006**
(21) Anmeldenummer: 05002883.6
(22) Anmeldetag: 11.02.2005
(51) Int. Cl.: F01N 9/00, F01N 11/00, F01N 3/021, F01N 3/023, G01N 27/02

(54) **Vorrichtung und Verfahren zur Ermittlung des Beladungszustands eines Partikelfilters**
Apparatus and method for determining the loading status of a particulate filter
Appareil et procédé d'évaluation de la charge en suies d'un filtre à particules

(30) Priorität: 12.02.2004 DE 102004007040
(43) Veröffentlichungstag der Anmeldung: 17.08.2005
(73) Patentinhaber: Daimler Chrysler AG, 70567 Stuttgart (DE)
(72) Erfinder: Birkhofer, Thomas, 88090 Immenstaad (DE); Dittler, Achim, Dr., 70619 Stuttgart (DE); Hertzberg, Andreas, Dr., 71706 Markgröningen (DE); Knezevic, Aleksander, Dr., 88045 Friedrichshafen (DE); Plog, Carsten, Dr., 88677 Markdorf (DE)

(56) Entgegenhaltungen:
- EP-A- 0 608 752
- WO-A-93/08382
- US-A- 4 656 832
- US-A- 4 829 766

## Beschreibung

Die Erfindung betrifft eine Vorrichtung zur Ermittlung des Beladungszustands eines als Formkörper ausgebildeten Partikelfilters einer Brennkraftmaschine mit einer Messanordnung und zum anderen ein Verfahren zur Ermittlung des Beladungszustands eines Partikelfilters mittels einer dem Partikelfilter zugeordneten Messanordnung.

Aus der Offenlegungsschrift DE 100 33 160 A1 ist es bekannt, einen Partikelfilter zur Verminderung der Partikelemission einer Brennkraftmaschine einzusetzen. Beim Betrieb der Brennkraftmaschine erfolgt eine zeitlich zunehmende Beladung des Partikelfilters mit Ruß- und/oder Ascheteilchen. Um ein Verstopfen des Partikelfilters zu verhindern, wird der angesammelte Ruß von Zeit zu Zeit durch Erhöhen der Abgastemperatur über die Rußabbrandtemperatur hinaus abgebrannt. Zur Feststellung der Notwendigkeit einer Partikelfilterregeneration wird die Beladung des Partikelfilters überwacht. Die Regeneration wird ausgelöst, wenn der durch die Rußbeladung verursachte Gegendruck des Partikelfilters unzulässig angestiegen ist. Hierzu wird das Signal eines Differenzdrucksensors ausgewertet. Bei Erreichen eines oberen Grenzwertes für die Beladung wird eine Regeneration des Partikelfilters gestartet, bei welcher der auf oder in dem Partikelfilter angesammelte Ruß abgebrannt wird.

Die Ermittlung der Partikelfilterbeladung auf der Basis eines Differenzdrucksensors ist allerdings auf Grund schwankender Durchsatzverhältnisse und Partikelfiltertemperaturen mit Ungenauigkeiten behaftet. Es besteht daher die Möglichkeit, dass die Regeneration des Partikelfilters verspätet gestartet wird, was zu Störungen des Fahrbetriebs und zu einer Schädigung des Partikelfilters führen kann. Dagegen führen verfrühte Regenerationen zu einem erhöhten Kraftstoffverbrauch.

Aus der WO 93/08382 A1 ist eine Vorrichtung zur Ermittlung des Beladungszustands eines Partikelfilters einer Brennkraftmaschine bekannt, welche einen Leitfähigkeitssensor mit wenigstens zwei Elektroden umfasst, die sich in das Filtermaterial erstrecken. Die Elektroden weisen einen bestimmten Abstand voneinander auf und sind an eine Auswerteschaltung angeschlossen, welche die Elektroden mit einem geeigneten Signal zur Ermittlung des zwischen ihnen vorhandenen elektrischen Widerstands beaufschlagt. Der ermittelte Widerstand bzw. die ermittelte Leitfähigkeit dient als Maß für die Partikelbeladung des Partikelfilters. Bei Erreichen einer vorgegebenen Leitfähigkeitsschwelle ist vorgesehen, eine Regeneration des Partikelfilters zu veranlassen.

Aus der US 4,829,766 ist es bekannt, die Regeneration eines Partikelfilters durch Verbrennung der überwiegend als brennbarer Ruß vorliegenden Partikel durchzuführen. Gemäß der US 4,829,766 können die angesammelten Rußpartikel durch elektrischen Stromfluss zum Verbrennen gebracht werden, wobei der Stromfluss durch die Rußpartikel selbst erfolgt, die sich dadurch auf die zum Verbrennen notwendige Zündtemperatur aufheizen. Zur Zündenergiezuführung ist der Partikelfilter mit einer geeigneten Elektrodenkonfiguration versehen.

Aus der Patentschrift US 4,656,832 ist es bekannt, zur Ermittlung der Rußbeladung eines Partikelfilters eine Elektrodenanordnung auf einem flächigen nichtleitenden Substrat aufzubringen und die Gesamtanordnung in den Abgasweg, gegebenenfalls auch ins Innere eines Partikelfilters einzubringen. Auf dem Substrat abgelagerte Rußpartikel vermindern den zwischen den Elektroden messbaren elektrischen Widerstand, woraus die Rußpartikelablagerung auf dem Substrat ermittelt und daraus der Zeitpunkt für eine Partikelfilterregeneration abgeleitet wird.

Die Erfassung der Rußbeladung auf einem flächigen Referenzbereich ermöglicht es jedoch ebenfalls nicht, die Detektierung des Beladungszustandes des Partikelfilters mit der gewünschten Genauigkeit vorzunehmen und den Partikelfilter optimal zu betreiben.

Aufgabe der Erfindung ist es daher, eine Vorrichtung und ein Verfahren anzugeben, welche eine zuverlässigere Ermittlung des Beladungszustands eines Partikelfilters und damit einen verbesserten Betrieb des Partikelfilters ermöglichen.

Diese Aufgabe wird durch eine Vorrichtung mit den Merkmalen des Anspruchs 1 und durch ein Verfahren mit den Merkmalen des Anspruchs 9 gelöst.

Die Erfindung zeichnet sich dadurch aus, dass für den Partikelfilter eine Messanordnung vorgesehen ist, welche eine spulenförmige Leiterstruktur umfasst, die zumindest einen Volumenteilbereich des Partikelfilters umgibt, wobei von der Messanordnung eine Größe erfassbar ist, die mit der Permeabilitätszahl der im Volumenteilbereich vorhandenen Materie und/oder mit der Induktivität der spulenförmigen Leiterstruktur korreliert. Hierbei ist unter der Permeabilitätszahl insbesondere die üblicherweise mit µᵣ bezeichnete relative magnetische Permeabilität zu verstehen.

Vorzugsweise ist die Leiterstruktur als zylindrische Drahtspule mit einer Vielzahl von Windungen ausgeführt, die zumindest um einen Teilabschnitt des Partikelfilters gewickelt ist oder im Inneren des als Formkörper ausgebildeten Partikelfilters angeordnet ist. Da die Permeabilitätszahl von der Art der Materie abhängt, die in dem von der Leiterstruktur umgebenen Volumenbereich vorhandenen ist, kann über eine mit der Permeabilitätszahl korrelierende Größe, welche mittels der Leiterstruktur erfasst wird, der Beladungszustand, d.h. die Beladung des Partikelfilters zuverlässig ermittelt werden. Dadurch können sowohl unnötige als auch verspätete Regenerationen sicher vermieden werden. Unter der Beladung des Partikelfilterkörpers wird dabei die volumenbezogene Ablagerung fester Bestandteile wie Ruß oder Asche in seinem Inneren verstanden. Vorzugsweise wird die Beladung in Gramm je Liter Filtervolumen angegeben. Als Partikelfilter kommen hauptsächlich poröse Formkörper oder mit Kanälen mit porösen Wänden durchzogene monolithische Formkörper in Betracht.

Parallel oder alternativ ist von der Messanordnung die Induktivität der Leiterstruktur oder eine mit der Induktivität der Leiterstruktur korrelierende Größe erfassbar. Der von der Leiterstruktur umgebene Volumenbereich wirkt als Spulenkern bezüglich der Leiterstruktur. Beim Betrieb der Messanordnung ist Leiterstruktur von einem elektrischen Strom durchflossen, der ein entsprechendes Magnetfeld erregt. Die vom Magnetfeld verursachte Induktion ist über die Permeabilitätszahl der vom Magnetfeld durchdrungenen Materie mit der Magnetfeldstärke verknüpft. Da die Induktivität der Leiterstruktur jedoch mit der Induktion verknüpft ist, kann mit Erfassung der Induktivität der Leiterstruktur bzw. einer mit dieser korrelierenden Größe auch die Beladung in dem maßgebenden Volumenbereich des Partikelfilters ermittelt werden.

In Ausgestaltung der Erfindung ist die Leiterstruktur wenigstens teilweise im Inneren des Partikelfilters angeordnet. Da eine ausreichende Empfindlichkeit der Messanordnung anzustreben ist, ist es aufgrund des Messeffekts vorteilhaft, dass der Kern der spulenförmigen Leiterstruktur möglichst vollständig vom Material des Partikelfilters ausgefüllt ist. Es ist deshalb günstig, die Leiterstruktur völlig im Inneren des Partikelfilters anzuordnen. Andererseits kann es z.B. aus praktischen Gründen vorteilhaft sein, wenn ein Teil der Leiterstruktur außerhalb des Partikelfilterkörpers angeordnet ist.

Ebenfalls vorteilhaft ist es, gemäß einer weiteren Ausgestaltung der Erfindung die spulenförmige Leiterstruktur außerhalb des Partikelfilters anzuordnen und den Partikelfilter z.B. abschnittsweise mit der Leiterstruktur zu umwickeln.

In weiterer Ausgestalltung der Erfindung ist die spulenförmige Leiterstruktur so angeordnet, dass ihre Längsachse annähernd parallel zu einer der Hauptachsen des zylinderförmigen Partikelfilters orientiert ist. Vorteilhaft ist es, die spulenförmige Leiterstruktur so anzuordnen, dass ihre Längsachse parallel zur Längsachse des Partikelfilters orientiert ist, wodurch sich ein einfacher Aufbau ergibt.

In weiterer Ausgestaltung der Erfindung umfasst die Messanordnung eine zweite Leiterstruktur, wobei die spulenförmige Leiterstruktur mit der zweiten Leiterstruktur in einer Wirkungsverbindung steht und die zweite Leiterstruktur eine vom Beladungszustand des Partikelfilters beeinflussbare elektrische Kenngröße aufweist, die von der Messanordnung erfassbar ist. Auf diese Weise können zwei verschiedene Messsignale erhalten werden, was die Zuverlässigkeit verbessert. Andererseits ist es vorteilhaft, die beiden Leiterstrukturen so auszuführen, dass sie in der Art einer Rückkopplung miteinander wechselwirken, so dass die Empfindlichkeit der Messanordnung erhöht ist. Die Wirkungsverbindung der beiden Leiterstrukturen kann dabei über eine elektrisch leitende Verbindung oder über eine drahtlose Kopplung erfolgen.

Die beiden Leiterstrukturen sind vorzugsweise an unterschiedlichen Stellen angeordnet. Somit ist es möglich, die Beladung des Partikelfilters mit Ruß und/oder Asche in wenigstens zwei unterschiedlichen Volumenteilbereichen des Partikelfilters und damit ortsaufgelöst zu ermitteln. Dies ermöglicht eine genaue Bewertung des Beladungszustandes und somit die Bestimmung eines optimalen Zeitpunkts zur Auslösung einer Partikelfilterregeneration beispielsweise durch Rußabbrand. Dadurch können sowohl unnötige als auch verspätete Regenerationen sicher vermieden werden.

In weiterer Ausgestaltung ist die von der Messanordnung erfassbare elektrische Kenngröße der zweiten Leiterstruktur eine kapazitive oder eine induktive elektrische Kenngröße. Vorteilhaft ist es insbesondere, die spulenförmige Leiterstruktur und die zweite Leiterstruktur so auszubilden, dass zusammengenommen eine resonante Struktur erhalten wird, was die Empfindlichkeit erhöht. Vorzugsweise ist die zweite Leiterstruktur hierzu als Kondensator ausgebildet.

In weiterer Ausgestaltung der Erfindung ist die zweite Leiterstruktur als zweite spulenförmige Leiterstruktur ausgebildet und von der Messanordnung ist eine Größe erfassbar, die mit der zwischen den Leiterstrukturen wirksamen Gegeninduktivität korreliert. Besonders vorteilhaft ist es, die Leiterstrukturen als gekoppelte Spulen auszuführen. Es kann sowohl die Gegeninduktivität der ersten zur zweiten Leiterstruktur, als auch die umgekehrt vorhandene Gegeninduktivität erfassbar sein. Dabei kann die erste oder die zweite Leiterstruktur auch außerhalb des Partikelfilters angeordnet sein, so dass von ihr kein Teil des Partikelfilters umgeben ist. Die jeweils andere Leiterstruktur umgibt dagegen wenigstens einen Teilvolumenbereich des Partikelfilters. Das Magnetfeld der außerhalb des Partikelfilters erregten vorzugsweise als Spule ausgeführten Leiterstruktur ist somit von der Messanordnung festlegbar. Der Fluss der damit verknüpften Induktion durch das von der anderen Leiterstruktur umgebene Partikelfilterteilvolumen ist jedoch von der dort vorhandenen Beladung abhängig. Somit kann über die Erfassung der Gegeninduktivität bzw. einer mit ihr korrelierenden Größe die Partikelfilterbeladung zuverlässig ermittelt werden.

In weiterer Ausgestaltung der Erfindung ist die spulenförmige Leiterstruktur in Abgasströmungsrichtung versetzt zur zweiten Leiterstruktur angeordnet. Dies ermöglicht eine in axialer Richtung aufgelöste Bestimmung der Rußbeladung des Partikelfilters. Da die Beladung des Partikelfilters im wesentlichen eine Abhängigkeit von der Abgasströmungsrichtung besitzt, d.h. einen axialen Gradienten aufweist, kann somit der axiale Verlauf der Beladung im Partikelfilter ermittelt werden. Dies ermöglicht eine besonders genaue Ermittlung des Beladungszustands des Partikelfilters. Der Volumenbereich, in welchem jeweils die Beladung erfasst wird, ergibt sich durch die Geometrie der spulenförmigen Leiterstruktur, im Falle einer kreiszylindrischen Spule insbesondere durch deren Durchmesser und Länge. Durch die Anzahl der Windungen bei einer spulenförmigen Leiterstruktur kann die Induktivität der spulenförmigen Leiterstruktur wesentlich mitbestimmt werden.

Das erfindungsgemäße Verfahren zur Ermittlung des Beladungszustands eines als Formkörper ausgebildeten Partikelfilters, welchem eine Messanordnung zugeordnet ist, ist dadurch gekennzeichnet, dass die Messanordnung eine spulenförmige Leiterstruktur umfasst, die zumindest einen Volumenteilbereich des Partikelfilters umgibt, wobei von der Messanordnung eine Größe erfasst wird, die mit der Permeabilitätszahl der im Volumenteilbereich vorhandenen Materie und/oder mit der Induktivität der spulenförmigen Leiterstruktur korreliert und aus der erfassten Größe die Beladung des Partikelfilters ermittelt wird. Die Gestalt des von der Messanordnung erfassten Volumenbereichs wird dabei im wesentlichen von der Geometrie der Leiterstruktur bestimmt. Vorzugsweise ist diese Leiterstruktur als zylindrische Spule ausgebildet, deren Induktivität von der Messanordnung erfasst wird. Da die Induktivität von der Art des als Spulenkern wirksamen Materials abhängt, kann über die materialabhängige Permeabilitätszahl die Beladung im maßgebenden Volumenbereich zuverlässig ermittelt werden.

In Ausgestaltung des Verfahrens wird die Regeneration des Partikelfilters ausgelöst, wenn die ermittelte Rußbeladung einen vorgebbaren oberen Grenzwert überschritten hat.

Die erfindungsgemäße Vorgehensweise ermöglicht die Ermittlung der Partikelfilterbeladung in einem volumenmäßig ausgedehnten Teilbereich des Partikelfilterkörpers und somit einerseits eine differenzierte Bewertung des Beladungszustandes. Andererseits kann ein maßgebender Teil des Partikelfilters erfasst werden. Je nach Anordnung und Orientierung kann die Beladung in einem nahezu beliebigen Bereich des Partikelfilters ermittelt werden. Dies ermöglicht die Bestimmung eines optimalen Zeitpunkts zur Auslösung einer Partikelfilterregeneration beispielsweise durch Rußabbrand. Dadurch können sowohl unnötige als auch verspätete Regenerationen sicher vermieden werden. Der für die Auslösung der Regeneration maßgebende Grenzwert für die Rußbeladung kann hierbei abhängig vom Anbringungsort der Leiterstruktur, der vorhandenen Aschebeladung, von der maximal tolerierbaren Wärmefreisetzung beim Rußabbrand während der Regeneration oder abhängig von anderen, gegebenenfalls motorischen Betriebsgrößen festlegbar sein.

Vorzugsweise wird die Rußbeladung des Partikelfilters durch zwei oder mehrere Leiterstrukturen ermittelt, welche in Strömungsrichtung versetzt zueinander angeordnet sind. Dadurch kann die Rußbeladung von zwei oder mehreren, sich gegebenenfalls überlappenden Bereichen des Partikelfilters ermittelt werden, und die Regeneration des Partikelfilters wird ausgelöst, wenn die Rußbeladung in wenigstens einem der erfassten Volumenteilbereiche des Partikelfilters den vorgebbaren oberen Grenzwert überschritten hat.

In weiterer Ausgestaltung des Verfahrens wird die Dauer der Regeneration an die vor der Auslösung der Regeneration ermittelte Beladung des Partikelfilters angepasst. Der verbrauchsintensive Regenerationsbetrieb wird auf diese Weise nur so lange wie nötig aufrechterhalten, was eine besonders kraftstoffverbrauchssparende Partikelfilterregeneration ermöglicht. Bei mehreren erfassten Volumenteilbereichen ist es insbesondere vorteilhaft, die Dauer der Partikelfilterregeneration an die höchste in einem der jeweiligen Bereiche ermittelte Beladung anzupassen, wodurch eine vollständige Partikelfilterregeneration ermöglicht wird.

In weiterer Ausgestaltung des Verfahrens wird die Rußbeladung des Partikelfilters nach erfolgter Regeneration ermittelt und mit einem vorgebbaren Sollwert verglichen und die Dauer einer nachfolgenden Regeneration wird in Abhängigkeit vom Ergebnis des Vergleichs festgelegt. Auf diese Weise kann die Regenerationsdauer optimiert werden. Vorteilhaft ist es auch, die Rußbeladung unmittelbar vor und unmittelbar nach der Regeneration zu ermitteln. Aus der Differenz der Rußbeladungen kann auf diese Weise die Güte der Regeneration ermittelt werden und die Regenerationsdauer nachfolgender Regenerationen im Sinne einer möglichst vollständigen Regeneration festgelegt werden. Vorteilhaft ist es, den Erfolg von mehreren Regenerationen auf die beschriebene Weise zu ermitteln, um einen statistisch besser abgesicherten Mittelwert für die festzulegende Regenerationsdauer zu erhalten.

In weiterer Ausgestaltung der Erfindung wird die Rußbeladung des Partikelfilters während der Regeneration des Partikelfilters ermittelt und die Regeneration beendet, wenn die Beladung einen vorgebbaren unteren Grenzwert unterschreitet. Insbesondere bei einer an mehreren Stellen vorgenommenen Rußbeladungsermittlung kann somit der Fortschritt der Regeneration besonders genau verfolgt und das Ende der Regeneration zuverlässig festgelegt werden.

In weiterer Ausgestaltung der Erfindung wird bei der Ermittlung der Partikelfilterbeladung ein Rußbeladungsanteil und ein Aschebeladungsanteil ermittelt. Da die Permeabilitätszahlen von Ruß und von gegebenenfalls eisenhaltiger Asche unterschiedlich sind, kann mit dem erfindungsgemäßen Verfahren zur Ermittlung des Beladungszustands des Partikelfilters hinsichtlich der Rußbeladung und der Aschebeladung unterschieden werden. Dies ermöglicht eine weiter verbesserte Genauigkeit bei der Ermittlung eines geeigneten Zeitpunkts für die Regeneration des Partikelfilters, da auf Asche zurückgehende Beladungsanteile nicht fälschlicherweise als Rußbeladung interpretiert werden.

In weiterer Ausgestaltung des Verfahrens wird ein Abgasdruck stromauf des Partikelfilters erfasst und aus dem erfassten Abgasdruck eine mit der Beladung des Partikelfilters korrelierende Größe ermittelt und zur Korrektur oder Überprüfung der von der Messanordnung ermittelten Rußbeladung herangezogen. Durch einen vorzugsweise eingangsseitig des Partikelfilters im Abgasstrang angeordneten Druck- oder Differenzdrucksensor kann die Zuverlässigkeit des von der Messanordnung ermittelten Beladungszustands des Partikel-filters verbessert werden. Weiterhin ist es möglich, eine Plausibilitätsprüfung der ermittelten Beladungen bzw. eine Diagnose oder Kalibrierung der Messanordnung durchzuführen.

Im Folgenden wird die Erfindung anhand von Zeichnungen und zugehörigen Beispielen näher erläutert. Dabei zeigen:
- Fig. 1: eine erste schematische Darstellung eines Partikelfilters mit zugehöriger Messanordnung zur Ermittlung der Partikelfilterbeladung,
- Fig. 2: eine zweite schematische Darstellung eines Partikelfilters mit zugehöriger Messanordnung zur Ermittlung der Partikelfilterbeladung und
- Fig. 3: ein Diagramm zur Verdeutlichung des Zusammenhangs zwischen Partikelfilterbeladung und einer damit korrelierenden messtechnisch erfassten Größe.

Nachfolgend werden vorteilhafte Ausführungsformen der Erfindung anhand von Beispielen beschrieben. Dabei wird beispielhaft ein Kraftfahrzeug mit einem Dieselmotor und einer Abgasreinigungsanlage, welche einen Partikelfilter umfasst, betrachtet. Es versteht sich, dass neben dem Partikelfilter weitere Abgasreinigungseinheiten, wie beispielsweise ein dem Partikelfilter vorgeschalteter Oxidationskatalysator in der Abgasreinigungsanlage vorhanden sein können. Als Partikelfilter kommt jeder geeignete Filtertyp in Betracht, nachfolgend wird jedoch ein sogenanntes "Wall-Flow-Filter" mit wechselseitig durch Stopfen verschlossenen, parallel verlaufenden Filterkanälen betrachtet. Das Filter ist vorzugsweise aus einem keramischen Material wie Siliziumkarbid oder Cordierit gebildet und besitzt eine zylindrische Gestalt.

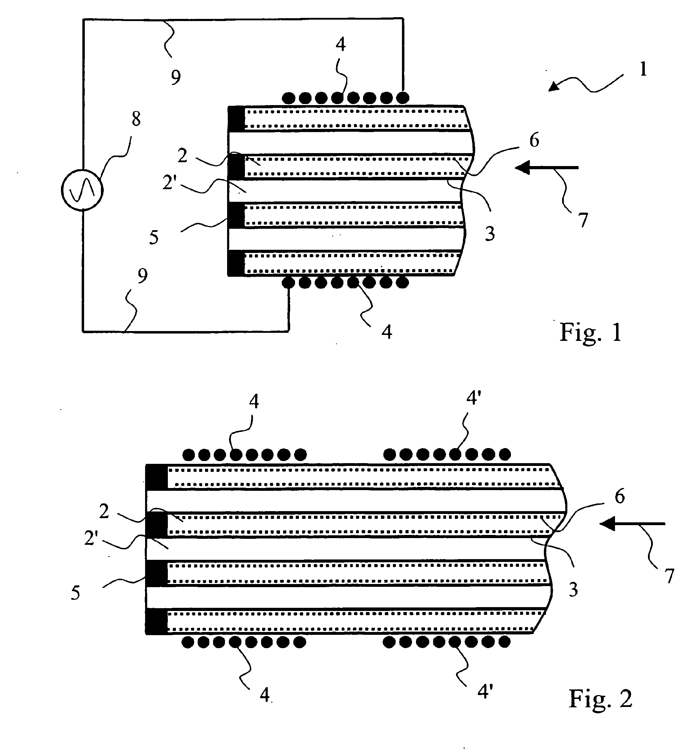

In Fig.1 ist ein solches Partikelfilter 1 schematisch mit Blick auf eine Querschnittsfläche parallel zur Abgasströmungsrichtung dargestellt. Der Partikelfilter 1 weist an der hier nicht dargestellten Eintrittsseite offene und an der Gasaustrittsseite verschlossene Gaseintrittskanäle 2, sowie an der Eintrittsseite verschlossene, jedoch an der Gasaustrittsseite offene Gasaustrittskanäle 2' auf. Die Kanäle 2, 2' sind durch poröse Kanalwände 3 voneinander getrennt, so dass der Abgasstrom durch die Kanalwände 3 gezwungen wird, wobei mit dem Abgasstrom mitgetragene Partikel ausgefiltert werden und sich auf den Kanalwänden 3 als Beladung 6 ablagern. Dabei tritt eine allmählich zunehmende Beladung 6 des Partikelfilters 1 mit den ausgefilterten Rußpartikeln bzw. Aschepartikeln ein.

Erfindungsgemäß ist für den Partikelfilter 1 eine Messanordnung mit einer Leiterstruktur vorgesehen, mit welcher die Beladung des Partikelfilters 1 ermittelt werden kann. Dabei ist die Leiterstruktur hier als eine Spule 4 ausgebildet, deren Wicklungen einen Abschnitt des Partikelfilters 1 umgeben. Vorzugsweise liegen die Wicklungen der Spule 4 an der Oberfläche des Partikelfilters 1 an oder weisen einen geringen Abstand zu ihr auf.

Die Messanordnung umfasst weiter einen Generator 8, der über Zuleitungen 9 an die Spule 4 angeschlossen ist. Über den Generator 8 wird die Spule 4 mit einer vorzugsweise als Wechselspannung ausgebildeten Messspannung versorgt. Der von der Spule 4 umgebene Abschnitt des Partikelfilters 1 bildet den Kern der Spule, weshalb deren Induktivität L wesentlich von der als Spulenkern wirksamen Materie bzw. deren Permeabilitätszahl µᵣ bestimmt wird. Auf Grund der unterschiedlichen Permeabilitätszahlen µᵣ von Ruß und den mineralartigen Aschen kann anhand der erfassten Induktivität L dabei zwischen der Rußbeladung und der Aschebeladung unterschieden werden. Dabei ist die erfasste Induktivität mit der komplexen elektrischen Impedanz der Leiterstruktur 4 verknüpft und es ist vorgesehen, diese hinsichtlich ihres Imaginärteils und/oder ihres Realteils bzw. nach Betrag und Phase auszuwerten. Neben der Induktivität L können auch die elektrischen Verluste, wie ohmsche Verluste oder Wirbelstromverluste erfasst und ausgewertet werden. Nachfolgend wird mit Bezug auf die genannten Messgrößen vereinfachend von einem Messsignal gesprochen. Es ist vorgesehen, den Generator 8 neben der Spannungs- bzw. Stromversorgung auch zur Auswertung des Messsignals einzusetzen. Die Auswertung des Messsignals kann jedoch auch von einer separaten, hier nicht dargestellten Messeinrichtung vorgenommen werden.

In diesem Zusammenhang ist es vorteilhaft, die Messfrequenz bei der Ermittlung der Induktivität im Sinne eines möglichst großen Messsignals und einer möglichst zuverlässigen Aussage über die Beladung geeignet zu wählen oder gegebenenfalls zu variieren. Vorteilhafterweise wird die Frequenz der Messspannung im Bereich zwischen 1 kHz und etwa 30 MHz eingestellt. Bevorzugt ist ein Frequenzbereich von etwa 100 kHz bis etwa 10 MHz, besonders bevorzugt beträgt die Messfrequenz etwa 1 MHz. Die Amplitude der vom Generator 8 an die Spule 4 angelegten Versorgungsspannung wird vorzugsweise in einem Bereich zwischen 1 V und 1000 V gewählt. Da die Induktivität L der Spule 4 auch von ihrer Geometrie bzw. Windungszahl abhängig ist, kann über die Anpassung dieser Größen die Empfindlichkeit ebenfalls geeignet angepasst werden.

Vorteilhaft ist es in diesem Zusammenhang auch, gleichzeitig die Temperatur in dem maßgebenden Partikelfilterbereich oder im Bereich der Leiterstruktur 4 zu erfassen, um Temperaturabhängigkeiten des Induktivitätsmesswertes bzw. Impedanzmesswertes korrigieren zu können.

Erfindungsgemäß ist es vorgesehen, wenigstens zwei spulenförmige Leiterstrukturen an unterschiedlichen Stellen anzubringen, wodurch eine ortsaufgelöste Ermittlung der Beladung im Partikelfilter 1 ermöglicht wird. In Fig. 2 ist eine Anordnung mit einer ersten Spule 4 und einer demgegenüber axial in Bezug auf den Partikelfilter versetzt angeordneten zweiten Spule 4' schematisch dargestellt. Dabei sind aus Gründen der Übersichtlichkeit der Generator und die Zuleitungen zu den Spulen 4, 4' nicht mit dargestellt. In Bezug auf Fig. 1 sind funktionsgleiche Bestandteile mit den gleichen Bezugszeichen versehen. Durch die versetzte Anordnung der Spulen 4, 4' kann die Beladung des Partikelfilters 1 lokal ermittelt werden. Je nach Größe des Partikelfilters 1 und nach der angestrebten Ortsauflösung können drei, vier, oder mehr Leiterstrukturen, vorzugsweise in Abgasströmungsrichtung versetzt zueinander angeordnet sein. Da insbesondere der ausströmseitige Endbereich des Partikel-filters 1 verstopfungsanfällig ist, ist es vorteilhaft, zumindest eine Leiterstruktur am Ausströmbereich des Partikelfilters 1 anzuordnen.

Neben der direkten Umwicklung des Partikelfilterkörpers mit der spulenförmigen Leiterstruktur 4 sind weitere, sich durch einfache Abwandlungen ergebende und daher nicht näher dargestellte Anordnungen möglich. Beispielsweise kann die Leiterstruktur spulenförmig an der Innenfläche eines Gehäuses, welches den Partikelfilter umgibt, angebracht sein. Weiter kann es vorteilhaft sein, eine spulenförmige Leiterstruktur vollkommen im Inneren des Partikelfilters parallel oder auch quer zur Abgasströmungsrichtung anzuordnen. Durch Überlappung von Spulen unterschiedlichen Durchmessers kann eine gekoppelte Spulenanordnung mit vorgebbarer Kopplung geschaffen werden.

Auf diese Weise werden Rußansammlungen ortsaufgelöst erfasst und es kann eine Regeneration des Partikelfilters eingeleitet werden, wenn die Rußbeladung in wenigstens einem der erfassten Volumenteilbereiche einen vorgebbaren Grenzwert überschreitet. Dadurch wird vermieden, dass der Partikelfilter lokal über ein zulässiges Mindestmaß hinaus mit Ruß beladen wird und dadurch bei einer Regeneration durch Rußabbrand durch übermäßige Wärmefreisetzung an dieser Stelle zerstört wird. Es versteht sich, dass eine Regeneration auch ausgelöst wird, wenn festgestellt wird, dass die integrale Gesamtbeladung des Partikelfilters einen vorgebbaren Schwellenwert überschreitet. Ferner ist es vorteilhaft, den die Regeneration auslösenden Grenzwert gegebenenfalls anzupassen, um beispielsweise auf sich ändernde Regenerationsbedingungen zu reagieren. Auf diese Weise wird ein unzulässiges Ansteigen des durch die Partikelfilterbeladung verursachten Gegendrucks vermieden. Durch das bedarfsgerechte, an die tatsächliche Rußbeladung angepasste Auslösen der Partikelfilterregeneration wird die Anzahl der Regenerationen auf ein Mindestmaß beschränkt und damit auch die thermische Belastung des Partikelfilters und gegebenenfalls vorhandener weiterer Abgasreinigungseinheiten gering gehalten.

Die für die Auslösung einer Regeneration maßgebenden Grenzwerte für die lokale Beladung bzw. die integrale Beladung werden zweckmäßigerweise in einem Steuergerät hinterlegt. Vorzugsweise wird von diesem Steuergerät der Betrieb des Dieselmotors gesteuert und für eine Regeneration des Partikelfilters umgestellt. Hierfür geeignete Betriebsweisen sind dem Fachmann geläufig und bedürfen daher hier keiner weiteren Erläuterung.

Vorteilhaft ist es, wenn die Regenerationszeit des Partikelfilters in Abhängigkeit von der vor der Auslösung der Regeneration festgestellten lokalen und/oder integralen Beladung z.B. durch eine kennfeldbasierte Regenerationszeitvorgabe festgelegt wird. In diesem Zusammenhang ist es vorteilhaft, die Temperatur im Partikelfilter zu erfassen und die Regenerationszeit in Abhängigkeit von vorab gespeicherten Rußabbrandgeschwindigkeiten für die jeweilige Temperatur festzulegen. Der Erfolg der Regeneration wird zweckmäßig nach Abschluss der Regeneration durch eine erneute Ermittlung der Beladung überprüft. Die Regenerationszeitvorgabe kann entsprechend korrigiert werden, indem ein Vergleich zwischen der festgestellten Beladung vor und nach der Regeneration ausgewertet wird. Auf diese Weise wird vermieden, dass der für die Regeneration erforderliche Betriebszustand länger als notwendig aufrechterhalten bleibt; der Energieaufwand bzw. Kraftstoffmehrverbrauch für die Regeneration wird dadurch klein gehalten. Für eine zuverlässige Festlegung der Regenerationsdauer ist es dabei zweckmäßig, eine Mittelung aus den entsprechenden Werten vor und nach mehreren Regenerationen vorzunehmen.

Besonders vorteilhaft ist es, die Beladung des Partikelfilters auch während der Regeneration zu überwachen. Der Regenerationsbetrieb wird dann vorzugsweise solange aufrechterhalten, bis die Beladung in jedem von einer jeweiligen Leiterstruktur umgebenen Volumenteilbereich einen vorgebbaren unteren Grenzwert unterschritten hat. Auf diese Weise werden unvollständige Partikelfilterregenerationen vermieden und die Aufnahmekapazität des Partikelfilters für den nachfolgenden Normalbetrieb des Dieselmotors wird maximiert.

Die Ermittlung der Partikelfilterbeladung in zwei oder mehreren Volumenteilbereichen des Partikelfilters wird vorteilhafterweise auch zur Differenzierung zwischen einem Rußbeladungsanteil und einem Aschebeladungsanteil genutzt. Hierzu wird ausgenützt, dass sich das Messsignal einer jeweiligen Leiterstruktur additiv aus einem durch die Rußbeladung und einem durch die Aschebeladung verursachten Anteil zusammensetzt und die Aschebeladung kontinuierlich anwächst. Obschon der Beitrag der Aschebeladung am gesamten Messsignal gering sein kann, kann der Aschebeladungsanteil gegebenenfalls ermittelt werden, wenn der zeitliche Verlauf des Messsignals erfasst wird und ein im Verlauf der Einsatzdauer des Partikelfilters stetig anwachsender Signalanteil ermittelt und berücksichtigt wird. Vorteilhaft ist in diesem Zusammenhang auch eine Variation der Messfrequenz, da die Permeabilitätszahl materialabhängig ist.

Insbesondere bei einem sehr geringen Anteil der Aschebeladung am Messsignal ist es vorteilhaft, die Aschebeladung indirekt zu ermitteln, indem das Messsignal hinsichtlich seines zeitlichen und örtlichen Verlaufs ausgewertet wird. Insbesondere ist es möglich, auf Grund des gegebenenfalls unterschiedlichen Verlauf des Messsignals festzustellen, inwieweit ein Teil des Partikelfilters stärker verrußt als ein anderer, bzw. ob auf Grund einer sehr starken Ascheablagerung in einem Volumenteilbereich nur noch eine geringe oder keine Verrußung mehr stattfindet.

Da mit steigender Aschebeladung die Aufnahmekapazität für Rußpartikel absinkt, ist es vorteilhaft die Regenerationsdauer und/oder die Zeitintervalle zwischen zwei Regenerationen in Abhängigkeit von der ermittelten Aschebeladung anzupassen bzw. festzulegen.

Speziell kann eine totale Verstopfung durch Ascheablagerung festgestellt werden, wenn in einem der erfassten Volumenteilbereiche des Partikelfilters eine Akkumulation von Ruß nicht mehr stattfindet, also ein zumindest annähernd stabiles Messsignal vorliegt. Insbesondere bei der Erfassung der Beladung in einer Mehrzahl von Bereichen des Partikelfilters kann somit ein Ascheverfüllgrad in bezug auf das Gesamtvolumen des Partikelfilters ermittelt werden. Somit kann ein Unbrauchbar-werden des Partikelfilters infolge einer überhöhten Asche-beladung rechtzeitig festgestellt werden und eine dement-sprechende Warnmeldung ausgegeben werden. Vorteilhaft ist es in diesem Zusammenhang, eine vorausschauende Berechnung über den weiteren Verlauf der Ascheablagerung vorzunehmen und eine Warnmeldung auszugeben, wenn eine vorgebbare verbleibende Restlaufzeit bis zum Unbrauchbarwerden des Partikelfilters unterschritten wird.

Im Falle eines Wall-Flow-Filters kann ein Unbrauchbarwerden auch infolge eines Stopfendurchbruchs auftreten. Damit ist in dem betreffenden Bereich keine Filterwirkung mehr vorhanden. Dieser Schadensfall kann daher erkannt werden, wenn über eine vorgebbare Zeitdauer kein nennenswerter Anstieg der Beladung in einem jeweiligen Bereich mehr erfolgt. Es ist vorgesehen, auch für diesen Schadensfall eine Fehlermeldung auszugeben.

Bei mehreren, insbesondere versetzt zueinander angeordneten Spulen ist es auch vorteilhaft, eine mit der Gegeninduktivität einer Spule korrelierende Größe, beispielsweise die Gegeninduktivität einer Spule gegenüber einer anderen Spule zu erfassen und hinsichtlich der Partikelfilterbeladung auszuwerten. Bei einer nicht dargestellten besonders vorteilhaften Ausführung sind drei Spulen in Abgasströmüngsrichtung hintereinander angeordnet und beispielsweise um den Partikelfilterkörper gewickelt oder umgeben hintereinanderliegende Volumenbereiche des Partikelfilterkörpers. Die mittlere Spule kann als Sender betrieben werden, während die beiden anderen Spulen jeweils als Empfänger für das von der mittleren Spule in ihnen induzierte magnetische Feld betrieben werden. Bei einer solchen Anordnung können vorteilhaft Unsymmetrien hinsicht-lich der axialen Verteilung der Partikelfilterbeladung erfasst werden. Auf diese Weise kann eine meist von der Ausströmseite des Partikelfilters ausgehende Aschebeladung bzw. Filterverstopfung erkannt und bewertet werden.

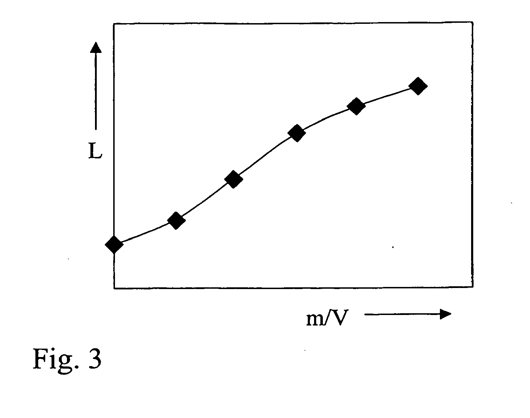

Zur Verdeutlichung des mittels einer Messanordnung gemäß Fig. 1 erfassten Messeffekts ist in einem in Fig. 3 dargestellten Diagramm die erfasste Induktivität L einer Spule 4 in Abhängigkeit von der volumenbezogenen Rußbeladung m/V des Partikelfilters dargestellt. Der Partikelfilter 1 wurde unter realitätsnahen Bedingungen mit dem rußpartikelfilterhaltigen Abgas eines nicht dargestellten Dieselmotors beaufschlagt und die Messanordnung gemäß Fig. 1 kontinuierlich betrieben. Dabei wurden Induktivitätswerte L im Bereich einiger Mikro-Henry bei Rußbeladungen m/V im Bereich von einigen Gramm Ruß je Liter Filtervolumen gemessen. Wie aus dem in Fig. 3 dargestellten Diagramm ersichtlich, ist die Abhängigkeit der als Messsignal ausgewerteten Induktivität L von der Rußbeladung m/V annähernd linear, so dass der Beladungszu-stand des Partikelfilters 1 zuverlässig ermittelt werden kann. Die aufgrund der Filterbeladung auftretenden Induktivitätsänderungen können beispielsweise über die Veränderung der Resonanzfrequenz eines Schwingkreises ermittelt werden, die von der Induktivität der Leiterstruktur 4 bestimmt ist.

Bei einer weiteren nicht dargestellten, vorteilhaften Ausführungsform ist zusätzlich zu einer spulenförmigen Leiterstruktur, die im Partikelfilter angeordnet oder auch abschnittsweise um den Partikelfilter herumgewickelt sein kann, eine zweite elektrische Leiterstruktur in oder am Partikelfilterkörper oder auch beabstandet außerhalb des Partikelfilters vorgesehen, so dass eine Wirkungsverbindung der spulenförmigen Leiterstruktur mit dieser zweiten Leiterstruktur gegeben ist. Die elektrische Kenngröße der zweiten Leiterstruktur, die ebenfalls induktiv aber auch kapazitiv sein kann, wird von der Messanordnung erfasst und ausgewertet. Dabei kann die zweite Leiterstruktur ebenfalls sensitiv in Bezug auf Ruß und/oder Asche sein. Es ist jedoch auch vorteilhaft, beispielsweise mittels einer als kapazitives Bauelement ausgeführten zweiten Leiterstruktur und der induktiven spulenförmigen Leiterstruktur eine resonante Anordnung zu bilden. Auf diese Weise kann eine erhöhte Empfindlichkeit gegenüber abgelagertem Ruß erhalten werden.

Die spulenförmige erste Leiterstruktur und die zweite Leiterstruktur können jedoch auch wechselwirkungsfrei ausgebildet bzw. angeordnet sein, so dass zwei unterschiedliche, voneinander unabhängige Signale erfasst und ausgewertet werden können, was die Zuverlässigkeit verbessert und die Störanfälligkeit vermindert.

Eine weitere Verbesserung der Zuverlässigkeit bei der Ermittlung des Beladungszustands und beim Betrieb des Partikelfilters wird erreicht, wenn zusätzlich zur erfindungsgemäßen Messanordnung ein Drucksensor bzw. Differenzdrucksensor zur Erfassung des Staudrucks stromauf des Partikelfilters eingesetzt wird. Auf der Basis des enstrechenden Drucksignals wird ebenfalls die Beladung des Partikelfilters charakterisiert. Hierfür können dem Fachmann geläufige Drucksensoren und Signalauswerteverfahren eingesetzt werden, weshalb auf weitere Ausführungen hierzu verzichtet werden kann.

Durch den Drucksensor kann die Zuverlässigkeit und Effizienz des Partikelfilterbetriebs weiter verbessert werden.
Vorteil-haft ist es hierfür beispielsweise, die mittels der Messanordnung ermittelte Partikelfilterbeladung einer Überprüfung, Plausibilitätskontrolle oder Korrektur anhand des Drucksignals zu unterziehen. Vorteilhaft ist es etwa, durch eine Wechselbeziehung in der Art einer Kreuzkorrelation die aus den Messsignalen der Messanordnung erhaltenen Werte für die Rußbeladung oder die für den Ablauf der Partikel-filterregeneration maßgebenden Beladungsgrenzwerte gegebenen-falls mit den Drucksignalwerten abzugleichen oder zu korri-gieren. Anhand des zusätzlichen Drucksensors ist es ferner möglich, eine Diagnose der Messanordnung durchzuführen um Störungen oder Defekte festzustellen und gegebenenfalls anzuzeigen.

## Patentansprüche

1. Vorrichtung zur Ermittlung des Beladungszustands eines als Formkörper ausgebildeten Partikelfilters (1) einer Brennkraftmaschine, mit einer Messanordnung,
**dadurch gekennzeichnet, dass**
die Messanordnung eine spulenförmige Leiterstruktur (4) umfasst, die zumindest einen Volumenteilbereich des Partikelfilters (1) umgibt, wobei von der Messanordnung eine Größe erfassbar ist, die mit der Permeabilitätszahl der im Volumenteilbereich vorhandenen Materie und/oder mit der Induktivität der spulenförmigen Leiterstruktur (4) korreliert.

2. Vorrichtung nach Anspruch 1,
**dadurch gekennzeichnet, dass**
die spulenförmige Leiterstruktur (4) wenigstens teilweise im Inneren des Partikelfilters (1) angeordnet ist.

3. Vorrichtung nach Anspruch 1,
**dadurch gekennzeichnet, dass**
die spulenförmige Leiterstruktur (4) außerhalb des Partikelfilters (1) angeordnet ist.

4. Vorrichtung nach einem der Ansprüche 1 bis 3,
**dadurch gekennzeichnet, dass**
der Partikelfilter (1) eine zylindrische Form aufweist und die Spulenlängsachse der spulenförmigen Leiterstruktur (4) annähernd parallel oder annähernd senkrecht zur Längsachse des Partikelfilters (1) orientiert ist.

5. Vorrichtung nach einem der Ansprüche 1 bis 4,
**dadurch gekennzeichnet, dass**
die Messanordnung eine zweite Leiterstruktur umfasst, wobei die spulenförmige Leiterstruktur (4) mit der zweiten Leiterstruktur in einer Wirkungsverbindung steht und von der zweiten Leiterstruktur eine vom Beladungszustand des Partikelfilters (1) beeinflussbare elektrische Kenngröße aufweist, die von der Messanordnung erfassbar ist.

6. Vorrichtung nach Anspruch 5,
**dadurch gekennzeichnet, dass**
die von der Messanordnung erfassbare elektrische Kenngröße der zweiten Leiterstruktur eine kapazitive oder eine induktive elektrische Kenngröße ist.

7. Vorrichtung nach Anspruch 6,
**dadurch gekennzeichnet, dass**
die zweite Leiterstruktur als zweite spulenförmige Leiterstruktur (4') ausgebildet ist und von der Messanordnung eine mit der zwischen den Leiterstrukturen (4; 4') wirksamen Gegeninduktivität korrelierende Größe erfassbar ist.

8. Vorrichtung nach einem der Ansprüche 5 bis 7,
**dadurch gekennzeichnet, dass**
die spulenförmige Leiterstruktur (4) in Abgasströmungsrichtung versetzt zur zweiten Leiterstruktur angeordnet ist.

9. Verfahren zur Ermittlung des Beladungszustands eines als Formkörper ausgebildeten Partikelfilters (1) einer Brennkraftmaschine, bei welchem beim Betrieb der Brennkraftmaschine eine Beladung des Partikelfilters (1) mit Ruß und/oder Asche erfolgt und von Zeit zu Zeit eine Regeneration des Partikelfilters (1) durch Abbrennen des auf dem Partikelfilter (1) angesammelten Rußes ausgelöst wird, wobei dem Partikelfilter (1) eine Messanordnung zugeordnet ist,
**dadurch gekennzeichnet, dass**
die Messanordnung eine spulenförmige Leiterstruktur (4), die zumindest einen Volumenteilbereich des Partikelfilters (4) umgibt, umfasst, wobei von der Messanordnung eine Größe erfasst wird, die mit der Permeabilitätszahl der im Volumenteilbereich vorhandenen Materie und/oder mit der Induktivität der spulenförmigen Leiterstruktur (4) korreliert und aus der erfassten Größe die Beladung des Partikelfilters (1) ermittelt wird.

10. Verfahren nach Anspruch 9,
**dadurch gekennzeichnet, dass**
die Regeneration ausgelöst wird, wenn die ermittelte Rußbeladung einen vorgebbaren oberen Grenzwert überschritten hat.

11. Verfahren nach Anspruch 9 oder 10,
**dadurch gekennzeichnet, dass**
die Dauer der Regeneration an die vor der Regeneration ermittelte Rußbeladung angepasst wird.

12. Verfahren nach Anspruch 9 oder 10,
**dadurch gekennzeichnet, dass**
die Rußbeladung des Partikelfilters (1) nach erfolgter Regeneration ermittelt und mit einem vorgebbaren Sollwert verglichen wird und die Dauer einer nachfolgenden Regeneration in Abhängigkeit vom Ergebnis des Vergleichs festgelegt wird.

13. Verfahren nach Anspruch 9 oder 10,
**dadurch gekennzeichnet, dass**
die Rußbeladung des Partikelfilters (1) während der Regeneration des Partikelfilters (1) ermittelt wird und die Regeneration beendet wird, wenn die Rußbeladung einen vorgebbaren unteren Grenzwert unterschreitet.

14. Verfahren nach einem der Ansprüche 9 bis 13,
**dadurch gekennzeichnet, dass**
bei der Ermittlung der Beladung des Partikelfilters (1) ein Rußbeladungsanteil und ein Aschebeladungsanteil ermittelt wird.

15. Verfahren nach einem der Ansprüche 9 bis 14,
**dadurch gekennzeichnet, dass**
ein Abgasdruck stromauf des Partikelfilters (1) erfasst wird und aus dem erfassten Abgasdruck eine mit der Beladung des Partikelfilters (1) korrelierende Größe ermittelt und zur Korrektur oder Überprüfung der von der Messanordnung ermittelten Rußbeladung herangezogen wird.

## Claims

1. Device for determining the load status of a particle filter (1) of an internal combustion engine provided in the form of a specifically shaped body, with a measuring system,
**characterised in that**
the measuring system comprises a coil-shaped conductor structure (4) which surrounds at least a volumetric part-region of the particle filter (1), and a variable can be detected by the measuring system which correlates with the permeability coefficient of the material disposed in the volumetric part-region and/or with the inductivity of the coil-shaped conductor structure (4).

2. Device as claimed in claim 1,
**characterised in that**
the coil-shaped conductor structure (4) is disposed at least partially in the interior of the particle filter (1).

3. Device as claimed in claim 1,
**characterised in that**
the coil-shaped conductor structure (4) is disposed outside the particle filter (1).

4. Device as claimed in one of claims 1 to 3,
**characterised in that**
the particle filter (1) has a cylindrical shape and the coil longitudinal axis of the coil-shaped conductor structure (4) is oriented substantially parallel with or substantially perpendicular to the longitudinal axis of the particle filter (1).

5. Device as claimed in one of claims 1 to 4,
**characterised in that**
the measuring system has a second conductor structure, and the coil-shaped conductor structure (4) is actively connected to the second conductor structure, and the second conductor structure has an electric characteristic variable which can be influenced by the load status of the particle filter (1) which can be detected by the measuring system.

6. Device as claimed in claim 5,
**characterised in that**
the electric characteristic variable of the second conductor structure which can be detected by the measuring system is a capacitive or an inductive electric characteristic variable.

7. Device as claimed in claim 6,
**characterised in that**
the second conductor structure is provided in the form of a second coil-shaped conductor structure (4') and a variable correlated to the active mutual inductivity between the conductor structures (4; 4') can be detected by the measuring system.

8. Device as claimed in one of claims 5 to 7,
**characterised in that**
the coil-shaped conductor structure (4) is disposed in the exhaust gas flow direction offset from the second conductor structure.

9. Method of determining the load status of a particle filter (1) of an internal combustion engine in the form of a specifically shaped body, whereby the particle filter (1) becomes loaded with soot and/or ash during operation of the internal combustion engine and a regeneration of the particle filter (1) by burning off accumulated soot is initiated from time to time, and the particle filter (1) is provided with a measuring system,
**characterised in that**
the measuring system comprises a coil-shaped conductor structure (4) surrounding at least a volumetric part-region of the particle filter (4), and a variable is detected by the measuring system which is correlated with the permeability coefficient of the material disposed in the volumetric part-region and/or with the inductivity of the coil-shaped conductor structure, and the load status of the particle filter is determined on the basis of the detected variable.

10. Method as claimed in claim 9,
**characterised in that**
the regeneration is initiated when the detected soot load has exceeded a pre-definable upper threshold value.

11. Method as claimed in claim 9 or 10,
**characterised in that**
the duration of the regeneration is adapted to the soot load level determined prior to regeneration.

12. Method as claimed in claim 9 or 10,
**characterised in that**
the soot load level of the particle filter (1) is determined after a regeneration is run and compared with a pre-definable desired value, and the duration of a subsequent regeneration is set depending on the result of the comparison.

13. Method as claimed in claim 9 or 10,
**characterised in that**
the soot load level of the particle filter (1) is determined during regeneration of the particle filter (1) and regeneration is terminated when the soot load level drops below a pre-definable lower threshold value.

14. Method as claimed in one of claims 9 to 13,
**characterised in that**
a soot load proportion and an ash load proportion are determined when determining the load status of the particle filter (1).

15. Method as claimed in one of claims 9 to 14,
**characterised in that**
an exhaust gas pressure upstream of the particle filter (1) is detected and a variable correlated to the load status of the particle filter (1) is determined from the detected exhaust gas pressure and applied as a means of correcting or checking the soot load level determined by the measuring system.

## Revendications

1. Dispositif pour déterminer l'état de charge d'un filtre à particules (1) réalisé sous la forme d'un corps moulé d'un moteur à combustible interne, comprenant un dispositif de mesure, **caractérisé en ce que** le dispositif de mesure comprend une structure de conducteur (4) en forme de bobine, qui entoure au moins une zone partielle de volume du filtre à particules (1), une grandeur, qui est en corrélation avec l'indice de perméabilité de la matière présente dans la zone partielle de volume et/ou avec l'inductance de la structure de conducteur (4) en forme de bobine, pouvant être enregistrée par le dispositif de mesure.

2. Dispositif selon la revendication 1,
**caractérisé en ce que**
la structure de conducteur (4) en forme de bobine est disposée au moins en partie à l'intérieur du filtre à particules (1).

3. Dispositif selon la revendication 1,
**caractérisé en ce que**
la structure de conducteur (4) en forme de bobine est disposée à l'extérieur du filtre à particules (1).

4. Dispositif selon l'une quelconque des revendications 1 à 3,
**caractérisé en ce que**
le filtre à particules (1) présente une forme cylindrique et l'axe longitudinal de la bobine de la structure de conducteur (4) en forme de bobine est orienté approximativement parallèlement ou approximativement perpendiculairement à l'axe longitudinal du filtre à particules (1).

5. Dispositif selon l'une quelconque des revendications 1 à 4,
**caractérisé en ce que**
le dispositif de mesure comprend une seconde structure de conducteur, la structure du conducteur (4) en forme de bobine étant dans une liaison active avec la seconde structure de conducteur et présentant par la seconde structure de conducteur une grandeur caractéristique électrique pouvant être influencée par l'état de charge du filtre à particules (1), qui peut être enregistrée par le dispositif de mesure.

6. Dispositif selon la revendication 5,
**caractérisé en ce que**
la grandeur caractéristique électrique, pouvant être enregistrée par le dispositif de mesure, de la seconde structure de conducteur a une grandeur caractéristique électrique capacitive ou une grandeur caractéristique électrique inductive.

7. Dispositif selon la revendication 6,
**caractérisé en ce que**
la seconde structure de conducteur est conçue comme une seconde structure de conducteur (4') en forme de bobine et une grandeur en corrélation avec l'inductance mutuelle efficace entre les structures de conducteur (4 ; 4') peut être enregistrée par le dispositif de mesure.

8. Dispositif selon l'une quelconque des revendications 5 à 7,
**caractérisé en ce que**
la structure de conducteur (4) en forme de bobine est disposée dans le sens d'écoulement des gaz brûlés avec un décalage par rapport à la seconde structure de conducteur.

9. Procédé pour déterminer l'état de charge d'un filtre à particules (1) conçu comme corps moulé d'un moteur à combustion interne, dans lequel, lors du fonctionnement du moteur à combustion interne, on a un chargement du filtre à particules (1) avec de la suie et/ou de la cendre et de temps en temps une régénération du filtre à particules (1) est déclenchée par la combustion de la suie accumulée sur le filtre à particules (1), un dispositif de mesure de temps étant attribué au filtre à particules (1),
**caractérisé en ce que**
le dispositif de mesure comprend une structure de conducteur (4) en forme de bobine, qui entoure au moins une zone partielle de volume du filtre à particules (4), une grandeur, qui est en corrélation avec l'indice de perméabilité de la matière présente dans la zone partielle de volume et/ou avec l'inductance de la structure de conducteur (4) en forme de bobine, étant enregistrée par le dispositif de mesure et la charge du filtre à particules (1) étant déterminée à partir de la grandeur enregistrée.

10. Procédé selon la revendication 9,
**caractérisé en ce que**
la régénération est déclenchée lorsque la charge de suie déterminée a dépassé une valeur limite supérieure prédéfinissable.

11. Procédé selon la revendication 9 ou 10,
**caractérisé en ce que**
la durée de la régénération est adaptée à la charge de suie déterminée avant la régénération.

12. Procédé selon la revendication 9 ou 10,
**caractérisé en ce que**
la charge de suie du filtre à particules (1) est déterminée une fois la régénération effectuée et est comparée avec une valeur prédéfinissable et la durée d'une régénération consécutive est définie en fonction du résultat de la comparaison.

13. Procédé selon la revendication 9 ou 10,
**caractérisé en ce que**
la charge de suie du filtre à particules (1) est déterminée pendant la régénération du filtre à particules (1) et la régénération est terminée lorsque la charge de suie passe au-dessous d'une valeur limite inférieure prédéfinissable.

14. Procédé selon l'une quelconque des revendications 9 à 13,
**caractérisé en ce que**,
lors du calcul de la charge du filtre à particules (1), une fraction de charge de suie et une fraction de charge de cendre sont déterminées.

15. Procédé selon l'une quelconque des revendications 9 à 14,
**caractérisé en ce que**
une pression de gaz brûlés est enregistrée en amont du filtre à particules (1) et une grandeur en corrélation avec la charge du filtre à particules (1) est déterminée à partir de la pression de gaz brûlé enregistrée et est utilisée pour la correction ou le contrôle de la charge de suie déterminée par le dispositif de mesure.
